# EUROPEAN PATENT SPECIFICATION

(11) **EP 2 769 891 B1**
(45) Date of publication and mention of the grant of the patent: **17.05.2017**
(21) Application number: 14155325.5
(22) Date of filing: 17.02.2014
(51) Int. Cl.: B60T 3/00, G01L 5/28, G01M 17/007

(54) **Equipment for test stands of the braking system of vehicles, in particular for four-wheel drive vehicle**
Zubehör für Prüfstände für Fahrzeugbremssysteme, insbesondere für vierradangetriebene Fahrzeuge
Equipement pour bancs d'essai de freins de véhicules, en particulier pour véhicule à quatre roues motrices

(30) Priority: 25.02.2013 IT MO20130049
(43) Date of publication of application: 27.08.2014
(73) Proprietor: Giuliano Group S.p.A., 42015 Correggio (RE) (IT)
(72) Inventor: Bonacini, Maurizio, 42015 Correggio (RE) (IT)
(74) Representative: Brunacci, Marco

(56) References cited:
- US-A- 5 277 060
- US-B1- 6 457 352

## Description

The present invention relates to an equipment for test stands of the braking system of vehicles, particularly for testing the braking system of four-wheel drive vehicles.

The use is known inside workshops of so-called roller test stands for testing vehicle braking systems.

Such test stands, in particular, are commonly used during the overhaul of motor vehicles, commercial vehicles, mopeds and motorcycles with two, three or four wheels to measure and test the braking force on each of the vehicle wheels. The test stands of known type generally comprise a pair of seats arranged alongside and spaced from one another, designed to accommodate respective vehicle wheels during the braking system test stage.

In practice, during the overhaul of a conventional two, three or four-wheeled vehicle, the vehicle can be placed on the test stand with one or two wheels positioned inside the seats.

These known test stands have, however, a number of drawbacks.

The use is in fact known and widespread of so called four-wheel drive vehicles. In particular, with reference to permanent four-wheel drive vehicles, meaning those where the four-wheel drive cannot be engaged/disengaged according to need, but is always engaged on all four wheels of the vehicle, it is impossible to perform braking tests except by also allowing the rotation of the two wheels that are not being tested.

To overcome this drawback, the use is known of suitable supplementary roller units having idle rollers on which the two wheels not being tested can be positioned.

The roller units of known type comprise a frame which can be positioned resting on the ground, generally rectangular in shape and having specific sloping ramps on two opposite sides to favour the up and down movement of a vehicle wheel.

A plurality of horizontal idle rollers are supported by the frame and are suitable for accommodating, resting on them, one of the wheels not being tested during the braking system tests.

Nevertheless, the use of the supplementary roller units involves the reverse movement of the vehicle during the braking tests and as the braking forces gradually increase.

This inevitably causes imprecision as regards the performed tests, inasmuch as the measured forces are underestimated and therefore falsified and not reliable.

Document US 5 277 060 A discloses a wheel centring device for use in a motor vehicle test platform, which employs mechanically synchronized centring rolls to position the driven wheel of a vehicle to be tested at the top centre of the dynamometer roll.

Document US 6 457 352 B1 discloses a roll dynamometer for motor vehicles comprising a running roll or drum for one wheel (2) of one axis of a vehicle to be examined and an electric motor for directly driving and slowing down the running rolls, wherein the stator housing of the electric motor is borne in a support frame in a pendulum fashion and supported on said support frame via force meters.

The main aim of the present invention is to provide an equipment for test stands of the braking system of vehicles, particularly for four-wheel drive vehicles, which allows performing the braking tests in an effective and reliable way. Another object of the present invention is to provide an equipment for test stands of the braking system of vehicles, particularly for four-wheel drive vehicles, which allows performing the braking tests in conditions of utmost safety.

Another object of the present invention is to provide an equipment for test stands of the braking system of vehicles, particularly for four-wheel drive vehicles, which allows overcoming the mentioned drawbacks of the state of the art in the ambit of a simple, rational, easy and effective to use as well as low cost solution.

The above objectives are achieved by the present equipment for test stands of the braking system of vehicles, in particular for four-wheel drive vehicles, according to claim 1.

Other characteristics and advantages of the present invention will become more evident from the description of a preferred, but not sole, embodiment of an equipment for test stands of the braking system of vehicles, particularly for four-wheel drive vehicles, illustrated purely as an example but not limited to the annexed drawings in which:
figure 1 is an axonometric view of the equipment according to the invention;
figures 2, 3 and 4 show the containment element of the equipment according the invention being raised and blocked after the positioning of a vehicle wheel on the equipment itself;

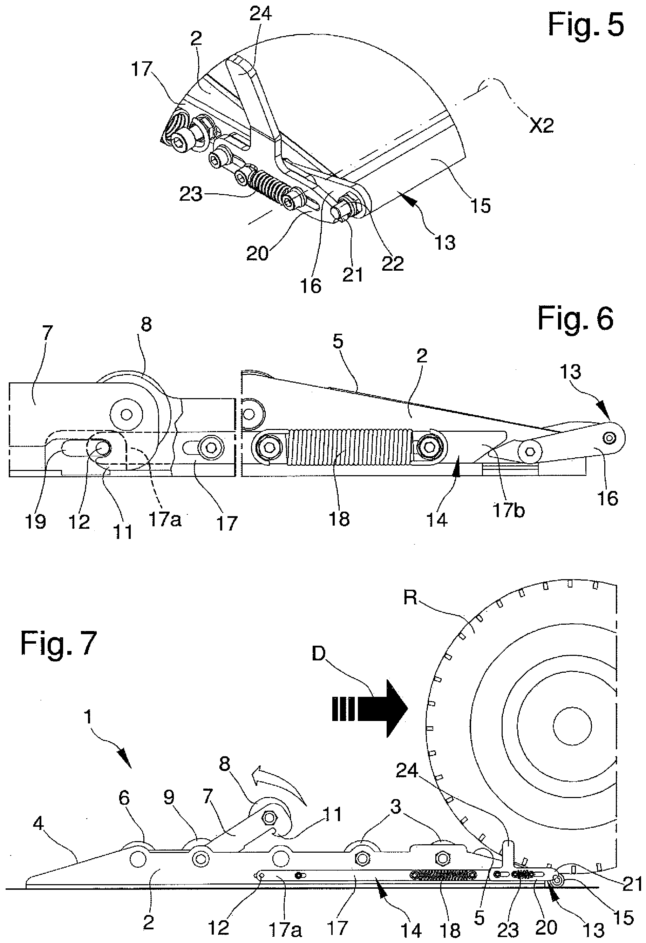

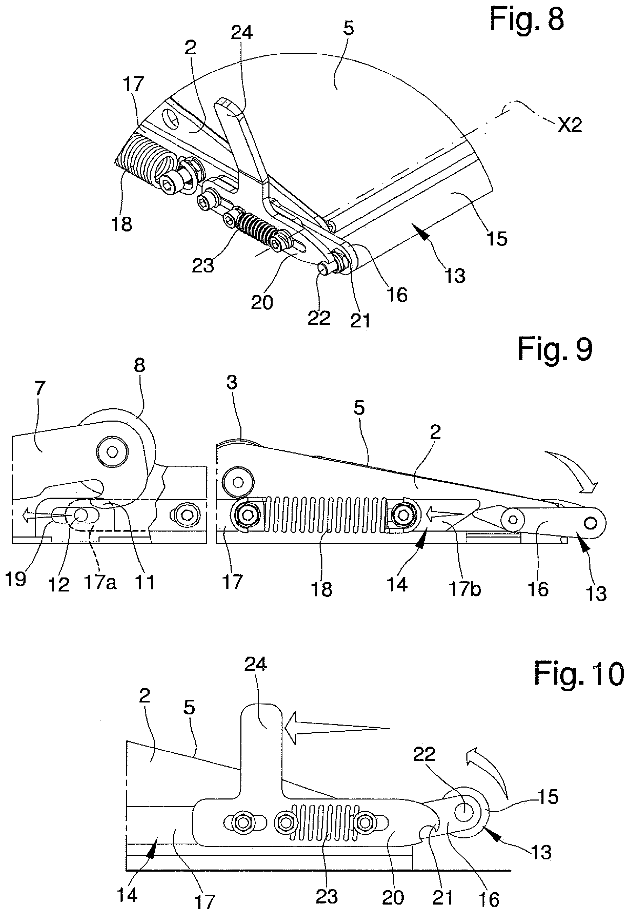

figures 5, 6, 7, 8 and 9 show the containment element of the equipment according the invention being released and lowered after the moving forward of the wheel on the equipment itself;
figure 10 is a side view which shows the start of the blocking means of the containment element of the equipment according the invention.

With particular reference to such illustrations, globally indicated by 1 is an equipment for test stands of the braking system of vehicles, usable in particular for four-wheel drive vehicles.

More specifically, the equipment 1 can be used to perform braking tests on vehicles with permanent four-wheel drive, i.e., vehicles on which the four-wheel drive cannot be engaged/disengaged according to need but which is always engaged on all four wheels.

The equipment 1 comprises a bearing frame 2 that can rest on the ground and resting and rotation means 3 supported by the frame 2 and suitable for resting a wheel R of a vehicle and for allowing the free rotation of the wheel R during a test of the braking system of the vehicle.

With reference to the particular embodiment shown in the illustrations, the frame 2 has a substantially rectangular shape and, in correspondence to respective portions substantially opposite one another, it has a first ramp 4 suitable for favouring the ascent of the wheel R and a second ramp 5 suitable for favouring the descent of the wheel R.

Furthermore, always with reference to the particular embodiment shown in the illustrations, the resting and rotation means 3 are composed of a plurality of supporting rollers fastened axially rotatable to the frame 2 and arranged horizontally and transversally with respect to the direction of forward movement D of the wheel R on the equipment 1.

Advantageously, the equipment 1 comprises a containment element 6 associated with the frame 2, suitable for engaging onto at least a rear portion of the wheel R and operating in contrast to the reverse movement of the vehicle caused by the increase in braking forces during the test on the braking system of the vehicle R, to retain the wheel itself on the supporting rollers 3.

Preferably, the containment element 6 is composed of a containment roller associated or associable with the frame 2 axially rotatable and arranged horizontally and transversally with respect to the direction of forward movement D of the wheel R.

The presence of the containment roller 6 allows containing the wheel R not being tested (e.g., one of the wheels of the rear axle) during tests performed on the braking system of the vehicle (performed e.g. on the wheels of the front axle).

In particular, the containment roller 6 prevents the reverse movement of the vehicle during tests performed on the braking system and therefore ensures a greater precision of the tests themselves.

Advantageously, with reference to a preferred embodiment of the equipment 1 shown in the illustrations, the containment roller 6 is associated mobile with the frame 2 between a lowered position, wherein it is substantially lowered or aligned with respect to the supporting rollers 3, and a raised position, wherein it is substantially raised with respect to the supporting rollers 3 and is suitable for engaging on a rear portion of the wheel R.

In particular, the positioning of the containment roller 6 in the lowered position favours the normal transit of the wheel R on the equipment 1, while the positioning of the containment roller 6 in the raised position permits the containment of the wheel R during the braking tests.

Different embodiments of the equipment 1 cannot however be ruled out, wherein, e.g., the containment roller 6 is associated movably with the frame 2. This way, the containment roller 6 can be removed to favour the normal transit of the wheel R on the equipment 1, before fastening the containment roller 6 to the frame 2 so as to contain the wheel R during the braking tests.

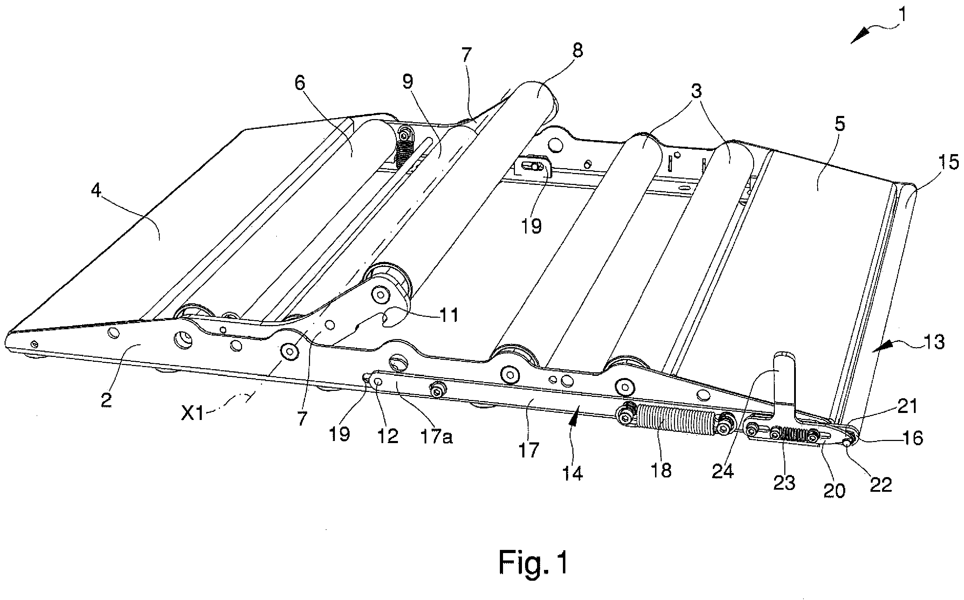

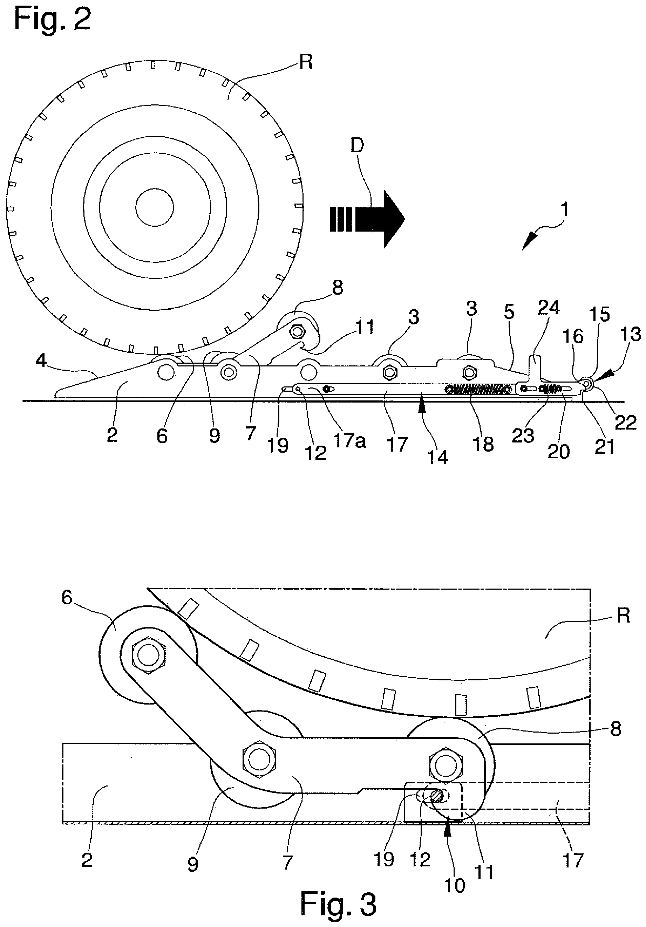

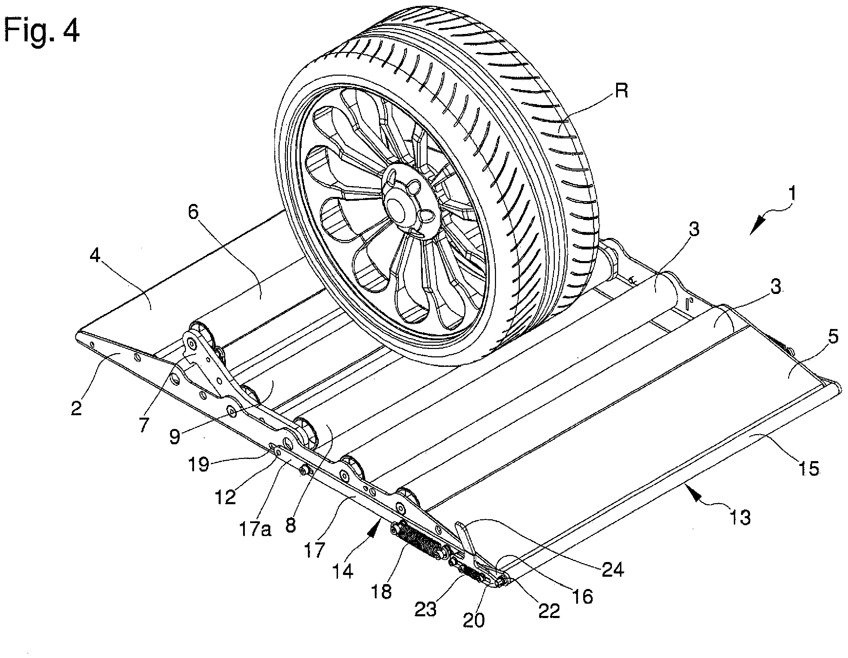

With a non sole reference to the preferred embodiment shown in the illustrations, the equipment 1 comprises a pair of tilting elements 7 supporting the containment roller 6, hinged in correspondence to two opposite lateral portions of the frame 2 and revolving between an idle position, wherein the containment roller 6 is in the lowered position (see e.g. figures 1 and 2), and a work position, wherein the containment roller 6 is in the raised position (see e.g. figures 3 and 4).

Each tilting element 7 is substantially V-shaped and has a substantially intermediate portion hinged to the frame 2 around a substantially horizontal rotation axis X1.

Advantageously, the tilting elements 7 have respective first extremities for supporting the containment roller 6 and respective substantially opposite second extremities and suitable for supporting a contact element 8.

In particular, the contact element 8 is suitable for being engaged by the wheel R during the transit along the direction of forward movement D, to move the tilting elements 7 from the above idle position to the above work position and, therefore, to bring the containment roller 6 from the lowered position to the raised position.

This way, the positioning can be made of the containment roller 6 from the lowered position to the raised position in a completely automatic way and by means of the forward movement and positioning of the wheel R on the equipment 1 only.

Usefully, the contact element 8 is composed of a contact roller 8 fastened axially rotatable to the respective second extremities of the tilting elements 7 and arranged horizontally and transversally to the direction of forward movement D of the wheel R.

In particular, with reference to the particular embodiment shown in the illustrations, the containment roller 6 is associated with the first extremities of the tilting elements 7 in the proximity of the first ramp 4 of ascent, while the contact roller 8 is associated with the second extremities of the tilting elements 7 in correspondence to a substantially intermediate portion of the frame 2, in the proximity of the supporting rollers 3.

Usefully, the contact roller 8 is suitable for providing further support to the wheel R during the rotation of the tilting elements 7 and during the braking tests.

A different number or a different arrangement of the containment roller 6 and of the contact roller 8 cannot however be ruled out.

Usefully, the equipment 1 can have means for adjusting the position of the containment roller 6 on the tilting elements 7, in order to allow the adjustment of the position of the containment roller 6 according to different sizes of tires. Usefully, a supplementary supporting roller 9 is fastened axially rotatable to respective intermediate portions of the tilting elements 7, coaxially to the rotation axis X1.

In particular, the supplementary supporting roller 9 is suitable for providing further support to the wheel R during the rotation of the tilting elements 7 and during the braking tests.

The use cannot however be ruled out of different systems of movement for the containment roller between the lowered position and the raised position.

The equipment 1 can have e.g. at least a presence sensor suitable for detecting the presence or not of the wheel R and operatively connected to at least one actuator, of the type of a pneumatic actuator or the like, to move the containment element 6.

In case of the wheel R being detected above the equipment 1, the sensor can start the actuator to move the containment element 6 from the lowered position to the raised position.

In the case, instead, of the movement of the wheel R being detected outside the equipment 1, the sensor can start the actuator to return the containment element 6 from the raised position to the lowered position.

Advantageously, the equipment 1 comprises blocking means, indicated as a whole in the illustrations with reference 10, suitable for blocking the containment roller 6 in the raised position.

With reference to the preferred embodiment shown in the illustrations, the blocking means 10 are composed of a fastening mechanism of the tilting elements 7 to the frame 2, when the tilting elements 7 are in the respective work positions.

In particular, the fastening mechanism 10 comprises a pair of teeth 11 made in correspondence to the respective second extremities of the tilting elements 7, in the proximity of the contact roller 8, and a corresponding pair of pins 12 associated with the frame 2.

The teeth 11 are suitable for being engaged on the pins 12 when the tilting elements 7 are in the work position.

Usefully, the equipment 1 comprises elastic return means, not shown in the illustrations, of the type of one or more springs or the like, operatively connected to at least one of the tilting elements 7 and operating to return the tilting elements 7 from the work position to the idle position and, therefore, to return the containment roller 6 from the raised position towards the lowered position.

Advantageously, the equipment 1 comprises disabling means 13 for disabling the blocking means 10, made up of a suitable disengagement mechanism suitable for releasing the teeth 11 from the respective pins 12.

In particular, such disengagement mechanism 13 comprises movement means 14 of the pins 12 between a fastening position, wherein the pins 12 are suitable for being engaged by the teeth 11, and a disengagement position, wherein the pins 12 are substantially spaced away from the teeth 11, when the tilting elements 7 are in the work position.

The movement means 14 comprise an operating element 15 operatively connected to the pins 12 and associated mobile with the frame 2 between a raised position, wherein the pins 12 are arranged in the respective fastening positions, and a lowered position, wherein the pins 12 are arranged in the respective disengagement positions.

Preferably, the operating element 15 is composed of a rotatable axially operating roller, hinged by means of a pair of levers 16 and around a hinging axis X2, in correspondence to an extremal portion of the frame 2 having the second ramp 5 for the descent of the wheel R, and arranged horizontally and transversally with respect to the direction of forward movement D of the wheel R.

Usefully, the operating roller 15 is suitable for being engaged by the wheel R following the transit of the wheel itself along the second ramp 5, to bring the pins 12 from the respective fastening positions to the relative disengaging positions.

Usefully, the movement means 14 comprise a suitable system of levers operatively placed between the operating roller 15 and the pins 12 and suitable for transforming the translation movement of the operating roller 15 between the raised position and the lowered position into the translation movement of the pins 12 between the fastening position and the disengaging position respectively.

In particular, such system of levers comprises at least a rod 17 associated translatable axially along at least a side of the frame 2, with a first extremity 17a having at least one of the pins 12 and with an opposite second extremity 17b operatively connected to at least one of the levers 16 by means of a cam-tappet mechanism.

The rod 17 is axially translatable between a first backward position (with respect to the operating roller 15), wherein the pin 12 is in the fastening position, and a forward position (with respect to the operating roller 15), wherein the pin 12 is in the disengaging position.

Preferably, the movement means 14 comprise a pair of rods 17 associated axially translatable along two opposite sides of the frame 2 and suitable for bearing respective pins 12.

Usefully, each of the levers 16 has a free extremity, substantially cam-shaped and suitable for engaging on the second extremity 17b of the rod 17 to move the rod itself between the above backward and forward positions.

A return spring 18 is connected to the rod 17 and to the frame 2 and is suitable for operating to bring the rod 17 back from the forward position towards the backward position.

Usefully, the pins 12 are supported sliding between the respective fastening and disengaging positions by means of specific rectilinear guides 19 obtained on the sides of the frame 2 and preferably composed of respective pairs of rectilinear slots.

Advantageously, the equipment 1 comprises retaining means 20 for stopping the operating roller 15 in the lowered position and, consequently, the pins 12 in the respective disengaging positions.

In particular, with reference to the preferred embodiment shown in the illustrations, the retaining means 20 are made up of a pair of anchoring elements having respective cogs 21 suitable for stopping respective protruding elements 22 associated integral with the operating roller 15, when the operating roller 15 is in the lowered position.

Each anchoring element 20 is associated translatable with the frame 2 between a fastening position, wherein the cog 21 is suitable for being engaged by the protruding element 22, and a disengagement position, wherein the cog 21 is substantially spaced away from the protruding element 22.

A return spring 23 is connected to the anchoring element 20 and to the frame 2 and is suitable for operating to move the anchoring element 20 from the disengaging position to the fastening position.

Usefully, the anchoring element 20 has a special pedal 24 suitable for being pressed by an operator to move the anchoring element 20 from the fastening position to the disengaging position.

The operation of the equipment 1 according to the invention is described below. An operator positions a vehicle to be tested on a stand for the braking test, with the wheels of the front axle arranged upstream with respect to the seats for the braking test.

The operator positions a first and a second equipment 1 downstream of the wheels of the vehicle's rear axle.

The operator moves the vehicle forward until the wheels of the front axle are positioned inside the seats for the braking test and the wheels of the rear axle are positioned on the respective equipment 1.

During such forward movement, the wheels of the rear axle, by acting on the contact roller 8, move the tilting elements 7 in rotation from the idle position to the work position, blocking the teeth 11 on the respective pins 12 (figures 2, 3 and 4).

At this point the test stand causes the wheels to rotate and performs the braking tests and, during such tests, the containment roller 6 operates in contrast to the reverse movement of the vehicle, containing the wheels of the rear axle on the respective equipment 1.

After the tests, the operator moves the vehicle forward, making the wheels of the rear axle drop from the respective equipment 1.

During such forward movement, the wheels of the rear axle push the operating roller 15 from the raised position as far as the lowered position, freeing the teeth 11 from the respective pins 12 and permitting the automatic repositioning of the tilting elements 7 from the work position to the idle position (figures from 5 to 9).

The operator can then perform the braking tests on the wheels of the rear axle. The operator moves the vehicle forward until the wheels of the rear axle are positioned upstream of the seats for the braking test and positions the equipment 1 downstream of the wheels of the front axle.

At this point, the operator resets the equipment 1 by means of the respective pedals 24 to return the operating rollers 15 to their respective raised positions and, therefore, to return the respective pins 12 to the fastening positions.

The operator moves the vehicle until the wheels of the rear axle are positioned inside the seats for the braking test and the wheels of the front axle are positioned on the respective equipment 1.

At this point the test stand causes the wheels to rotate and performs the braking tests and, during such tests, the containment roller 6 operates in contrast to the reverse movement of the vehicle, containing the wheels of the front axle on the respective equipment 1.

After the tests, the operator moves the vehicle forward, making the wheels of the front axle drop from the respective equipment 1.

During such forward movement, the wheels of the front axle push the operating roller 15 from the raised position as far as the lowered position, freeing the teeth 11 from the respective pins 12 and permitting the automatic repositioning of the tilting elements 7 from the work position to the idle position (figures from 5 to 9).

It has in fact been ascertained how the described invention achieves the proposed objects.

In particular, it is underlined that the presence of the containment roller permits performing the braking tests in an effective and reliable way, in fact preventing undesired reverse movements of the vehicle during the braking tests.

The presence of the containment roller also permits performing the braking tests in conditions of utmost safety.

## Claims

1. Equipment (1) for test stands of the braking system of vehicles, in particular for four-wheel drive vehicles, comprising at least a bearing frame (2) having resting and rotation means (3) for at least one wheel (R) of a vehicle, suitable for resting said wheel (R) and for allowing the free rotation of said wheel (R) during a test of the braking system of the vehicle, **characterized in that** it comprises at least one containment element (6) associated mobile with said frame (2) between a lowered position, wherein it is substantially lowered or aligned with respect to said resting and rotation means (3) in order to favours the normal transit of the wheel (R) on the equipment (1), and a raised position, wherein it is substantially raised with respect to said resting and rotation means (3) and is suitable for engaging onto at least a rear portion of said wheel (R) to retain said wheel (R) onto said resting and rotation means (3) during said test of the braking system of the vehicle.

2. Equipment (1) according to claim 1, **characterized in that** it comprises at least one tilting element (7) having said containment element (6) and associated revolving with said frame (2) between an idle position, wherein said containment element (6) is in the lowered position, and a work position, wherein said containment element (6) is in the raised position.

3. Equipment (1) according to claim 2, **characterized in that** said tilting element (7) is substantially V-shaped.

4. Equipment (1) according to any of claims 2 and 3, **characterized in that** said tilting element (7) has a substantially intermediate portion hinged to said frame (2) and revolving around a substantially horizontal rotation axis (X1).

5. Equipment (1) according to any of claims from 2 to 4, **characterized in that** said tilting element (7) has a first extremity with said containment element (6) and a substantially opposite second extremity with at least a contact element (8) suitable for being engaged by said wheel (R) to move said tilting element (7) from said idle position to said work position.

6. Equipment (1) according to any of the preceding claims, **characterized in that** it comprises blocking means (10) for blocking said containment element (6) in said raised position.

7. Equipment (1) according to claim 6 and to any of claims from 2 to 5, **characterized in that** said blocking means (10) comprise at least one fastening mechanism (10) of said tilting element (7) to said frame (2), when said tilting element (7) is in the work position.

8. Equipment (1) according to claim 7, **characterized in that** said fastening mechanism (10) comprises at least one tooth (11) made in correspondence to at least one portion of said tilting element (7) and at least one pin (12) associated with said frame (2), said tooth (11) being engaged on said pin (12) when said tilting element (7) is in the work position.

9. Equipment (1) according to any of the preceding claims, **characterized in that** it comprises elastic return means associated with said containment element (6) and operating to move said containment element (6) from said raised position to said lowered position.

10. Equipment (1) according to any of claims from 6 to 9, **characterized in that** it comprises disabling means (13) of said blocking means (10).

11. Equipment (1) according to claim 10, **characterized in that** said disabling means (13) comprise at least one disengagement mechanism (13) of said fastening mechanism (10), said disengagement mechanism (13) being suitable for releasing said tilting element (7) from said frame (2).

12. Equipment (1) according to claims 8 and 11, **characterized in that** said disengagement mechanism (13) comprises movement means (14) of said pin (12) between a fastening position, wherein said pin (12) is suitable for being engaged by said tooth (11), and a disengagement position, wherein said pin (12) is substantially spaced away from said tooth (11).

13. Equipment (1) according to claim 12, **characterized in that** said movement means (14) comprise at least one operating element (15) operatively connected to said pin (12) and associated mobile with said frame (2) between a raised position, wherein said pin (12) is arranged in said fastening position, and a lowered position, wherein said pin (12) is arranged in said disengagement position.

14. Equipment (1) according to claim 13, **characterized in that** said movement means (14) comprise at least one system of levers (16, 17) operatively positioned between said operating element (15) and said pin (12).

## Patentansprüche

1. Einrichtung (1) für Prüfstände des Bremssystems von Fahrzeugen, insbesondere für vierrädrig angetriebene Fahrzeuge, umfassend mindestens einen Lagerrahmen (2), der Auflage- und Rotationsmittel (3) für mindestens ein Rad (R) eines Fahrzeuges aufweist, geeignet zum Auflegen des Rades (R) und zum Ermöglichen der freien Rotation des Rades (R) während einer Prüfung des Bremssystems des Fahrzeuges, **dadurch gekennzeichnet, dass** sie mindestens ein Eingrenzungselement (6) umfasst, das dem Rahmen (2) beweglich zwischen einer abgesenkten Position, in welcher es im Wesentlichen abgesenkt oder im Verhältnis zu den Auflage- und Rotationsmitteln (3) ausgerichtet ist, um das normale Durchlaufen des Rades (R) auf der Einrichtung (1) zu begünstigen, und einer angehobenen Position, in welcher es im Wesentlichen im Verhältnis zu den Auflage- und Rotationsmitteln (3) angehoben ist, zugeordnet ist und geeignet ist, in mindestens einen hinteren Abschnitt des Rades (R) einzugreifen, um das Rad (R) auf den Auflage- und Rotationsmitteln (3) während der Prüfung des Bremssystems des Fahrzeuges fest zu halten.

2. Einrichtung (1) nach Anspruch 1, **dadurch gekennzeichnet, dass** sie mindestens ein Neigungselement (7) umfasst, welches das Eingrenzungselement (6) und zugeordnetes Drehen mit dem Rahmen (2) zwischen einer Leerlaufposition, in welcher sich das Eingrenzungselement (6) in der abgesenkten Position befindet, und einer Arbeitsposition, in welcher sich das Eingrenzungselement (6) in der angehobenen Position befindet, aufweist.

3. Einrichtung (1) nach Anspruch 2, **dadurch gekennzeichnet, dass** das Neigungselement (7) im Wesentlichen V-förmig ist.

4. Einrichtung (1) nach einem der Ansprüche 2 und 3, **dadurch gekennzeichnet, dass** das Neigungselement (7) im Wesentlichen einen Zwischenabschnitt umfasst, der an dem Rahmen (2) angelenkt ist und sich um eine im Wesentlichen horizontale Rotationsachse (X1) dreht.

5. Einrichtung (1) nach einem der Ansprüche 2 bis 4, **dadurch gekennzeichnet, dass** das Neigungselement (7) ein erstes Ende mit dem Eingrenzungselement (6) und ein im Wesentlichen gegenüberliegendes zweites Ende mit mindestens einem Kontaktelement (8) aufweist, das geeignet ist, mit dem Rad (R) in Eingriff zu bringen, um das Neigungselement (7) aus der Leerlaufposition in die Arbeitsposition zu bewegen.

6. Einrichtung (1) nach einem der vorhergehenden Ansprüche, **dadurch gekennzeichnet, dass** sie Blockierungsmittel (10) zum Blockieren des Eingrenzungselements (6) in der angehobenen Position umfasst.

7. Einrichtung (1) nach Anspruch 6 und einem der Ansprüche 2 bis 5, **dadurch gekennzeichnet, dass** die Blockierungsmittel (10) mindestens einen Befestigungsmechanismus (10) des Neigungselementes (7) an dem Rahmen (2) umfassen, wenn sich das Neigungselement (7) in der Arbeitsposition befindet.

8. Einrichtung (1) nach Anspruch 7, **dadurch gekennzeichnet, dass** der Befestigungsmechanismus (10) mindestens einen Zahn (11) umfasst, der in Entsprechung zu mindestens einem Abschnitt des Neigungselementes (7) und mindestens einem Stift (12) hergestellt ist, der dem Rahmen (2) zugeordnet ist, wobei der Zahn (11) auf dem Stift (12) eingreift, wenn sich das Neigungselement (7) in der Arbeitsposition befindet.

9. Einrichtung (1) nach einem der vorhergehenden Ansprüche, **dadurch gekennzeichnet, dass** sie elastische Rückstellmittel umfasst, die dem Eingrenzungselement (6) zugeordnet sind, und betrieben werden, um das Eingrenzungselement (6) aus der angehobenen Position in die abgesenkte Position zu bewegen.

10. Einrichtung (1) nach einem der Ansprüche von 6 bis 9, **dadurch gekennzeichnet, dass** sie Deaktivierungsmittel (13) der Blockierungsmittel (10) umfasst.

11. Einrichtung (1) nach Anspruch 10, **dadurch gekennzeichnet, dass** die Deaktivierungsmittel (13) mindestens einen Ausrückmechanismus (13) des Befestigungsmechanismus (10) umfassen, wobei der Ausrückmechanismus (13) geeignet ist, das Neigungselement (7) aus dem Rahmen (2) freizugeben.

12. Einrichtung (1) nach den Ansprüchen 8 und 11, **dadurch gekennzeichnet, dass** der Ausrückmechanismus (13) Bewegungsmittel (14) des Stiftes (12) zwischen einer Befestigungsposition, in welcher der Stift geeignet ist, mit dem Zahn (11) einzugreifen, und einer Ausrückposition, in welcher der Stift (12) im Wesentlichen von dem Zahn (11) weg beabstandet ist, umfasst.

13. Einrichtung (1) nach Anspruch 12, **dadurch gekennzeichnet, dass** die Bewegungsmittel (14) mindestens ein Betriebselement (15) umfassen, das mit dem Stift (12) wirkverbunden ist, und dem Rahmen (2) zwischen einer angehobenen Position, in welcher der Stift (12) in der Befestigungsposition angeordnet ist, und einer abgesenkten Position, in welcher der Stift (12) in der Ausrückposition angeordnet ist, beweglich zugeordnet ist.

14. Einrichtung (1) nach Anspruch 13, **dadurch gekennzeichnet, dass** die Bewegungsmittel (14) mindestens ein System mit Hebeln (16, 17) umfassen, die wirkverbunden zwischen dem Betriebselement (15) und dem Stift (12) positioniert sind.

## Revendications

1. Equipement (1) pour bancs d'essai du système de freinage de véhicules, notamment pour véhicules à quatre roues motrices, comprenant au moins un bâti support (2) possédant des moyens d'appui et de rotation (3) pour au moins une roue (R) d'un véhicule, aptes à recevoir en appui ladite roue (R) et à permettre la libre rotation de ladite roue (R) lors d'un essai du système de freinage du véhicule, **caractérisé en ce qu'**il comprend au moins un élément de retenue (6) associé de façon mobile audit bâti (2) entre une position abaissée, dans laquelle il est sensiblement abaissé ou aligné par rapport auxdits moyens d'appui et de rotation (3) afin de favoriser le passage normal de la roue (R) sur l'équipement (1), et une position relevée, dans laquelle il est sensiblement relevé par rapport auxdits moyens d'appui et de rotation (3) et est apte à s'engager sur au moins une portion arrière de ladite roue (R) pour retenir ladite roue (R) sur lesdits moyens d'appui et de rotation (3) lors dudit test du système de freinage du véhicule.

2. Equipement (1) selon la revendication 1, **caractérisé en ce qu'**il comprend au moins un élément basculant (7) possédant ledit élément de retenue (6) et monté en rotation par rapport audit bâti (2) entre une position de repos, dans laquelle ledit élément de retenue (6) est en position abaissée, et une position de travail, dans laquelle ledit élément de retenue (6) est en position relevée.

3. Equipement (1) selon la revendication 2, **caractérisé en ce que** ledit élément basculant (7) est sensiblement en forme de V.

4. Equipement (1) selon l'une quelconque des revendications 2 et 3, **caractérisé en ce que** ledit élément basculant (7) possède une portion sensiblement intermédiaire articulée avec ledit bâti (2) et tournant autour d'un axe de rotation sensiblement horizontal (X1).

5. Equipement (1) selon l'une quelconque des revendications de 2 à 4, **caractérisé en ce que** ledit élément basculant (7) possède une première extrémité comprenant ledit élément de retenue (6) et une seconde extrémité sensiblement à l'opposé comprenant au moins un élément de contact (8) apte à être engagé par ladite roue (R) pour déplacer ledit élément basculant (7) de ladite position de repos vers ladite position de travail.

6. Equipement (1) selon l'une quelconque des revendications précédentes, **caractérisé en ce qu'**il comprend des moyens de blocage (10) pour bloquer ledit élément de retenue (6) dans ladite position relevée.

7. Equipement (1) selon la revendication 6 et l'une quelconque des revendications de 2 à 5, **caractérisé en ce que** lesdits moyens de blocage (10) comprennent au moins un mécanisme de fixation (10) dudit élément basculant (7) audit bâti (2), lorsque ledit élément basculant (7) est en position de travail.

8. Equipement (1) selon la revendication 7, **caractérisé en ce que** ledit mécanisme de fixation (10) comprend au moins une dent (11) réalisée en correspondance avec au moins une portion dudit élément basculant (7) et au moins un pion (12) associé audit bâti (2), ladite dent (11) étant engagée sur ledit pion (12) lorsque ledit élément basculant (7) est en position de travail.

9. Equipement (1) selon l'une quelconque des revendications précédentes, **caractérisé en ce qu'**il comprend des moyens de rappel élastiques associés audit élément de retenue (6) et agissant pour déplacer ledit élément de retenue (6) de ladite position relevée vers ladite position abaissée.

10. Equipement (1) selon l'une quelconque des revendications de 6 à 9, **caractérisé en ce qu'**il comprend des moyens de désactivation (13) desdits moyens de blocage (10).

11. Equipement (1) selon la revendication 10, **caractérisé en ce que** lesdits moyens de désactivation (13) comprennent au moins un mécanisme de désengagement (13) dudit mécanisme de fixation (10), ledit mécanisme de désengagement (13) étant apte à libérer ledit élément basculant (7) dudit bâti (2).

12. Equipement (1) selon les revendications 8 et 11, **caractérisé en ce que** ledit mécanisme de désengagement (13) comprend des moyens de déplacement (14) dudit pion (12) entre une position de fixation, dans laquelle ledit pion (12) est apte à être engagé par ladite dent (11), et une position de désengagement, dans laquelle ledit pion (12) est sensiblement écarté de ladite dent (11).

13. Equipement (1) selon la revendication 12, **caractérisé en ce que** lesdits moyens de déplacement (14) comprennent au moins un élément d'actionnement (15) fonctionnellement relié audit pion (12) et associé de façon mobile audit bâti (2) entre une position relevée, dans laquelle ledit pion (12) est agencé dans ladite position de fixation, et une position abaissée, dans laquelle ledit pion (12) est agencé dans ladite position de désengagement.

14. Equipement (1) selon la revendication 13, **caractérisé en ce que** lesdits moyens de déplacement (14) comprennent au moins un système de leviers (16, 17) fonctionnellement positionné entre ledit élément de commande (15) et ledit pion (12).
